# EUROPEAN PATENT SPECIFICATION

(11) **EP 1 686 056 B1**
(45) Date of publication and mention of the grant of the patent: **27.07.2011**
(21) Application number: 05078056.8
(22) Date of filing: 28.12.2005
(51) Int. Cl.: B64C 1/14, B64C 7/00

(54) **Reinforced cover for openings in an aerodynamic contour**
Verstärkte Abdeckung für Öffnungen eines aerodynamischen Profils
Couvercle renforcé pour ouvertures d'un profil aérodynamique

(30) Priority: 31.12.2004 ES 200403162; 31.12.2004 ES 200403163
(43) Date of publication of application: 02.08.2006
(73) Proprietor: Airbus Operations S.L., 28906 Getafe, Madrid (ES)
(72) Inventor: Martin Hernandez, Agustin Mariano, 28902 Getafe (ES)
(74) Representative: Ungria Lopez, Javier

(56) References cited:
- EP-A- 0 508 503
- FR-A- 2 789 144
- GB-A- 2 238 991
- GB-A- 2 323 576

## Description

The present invention pertains to the field of the covers used for covering openings, such as gaps and cut-outs, which have an effect on the aerodynamic properties of outer surfaces of vehicles such as aircraft and high-speed trains. This invention is particularly encompassed within the sector of the covers used for covering openings located between the surface of a moving element and the surface of a fixed element on such a vehicle.

### PRIOR ART TO THE INVENTION

On high-speed vehicles such as aircraft and high-speed trains, there are moving elements, such as may be, for example, on aircraft, the elevators and rudders or flaps, which articulated to fixed elements, between which there are openings affecting the aerodynamic contour. The sealing of these openings, which may have large extensions, is necessary for the purpose of reducing the structural or parasitic drag of the vehicle and so as not to affect the aerodynamic efficiency of the surface, given that the dimensions of such openings may generate unanticipated behaviors in the flow of air circulating around the vehicle. This problem is especially important for aircraft.

The typical movement of the surfaces of the moving elements is usually that of rotating around a fixed axis and gaps are formed between the fixed element and the moving element. In addition, if this rotating axis is located near the surface, the fitting holding it into place may interfere with the outer cladding of the moving surface, so that cut-outs must be made therein, these cut-outs being dimensioned so as to prevent interference in the case of maximum deflection of the surface. On returning to the cruising position, these cut-outs remain open outward, thus giving rise to aerodynamic problems consisting, on one hand, in the possibility of unanticipated behaviors of the vehicle and, on the other, in larger fuel consumption. Thus, for example, in, linkage of the elevator to the body of the aircraft, usually consists of a fixed fitting supported by a primary structure covered by an aerodynamic panel and a fitting of the moving element, joined together by means of an assembly comprising of a bolt and bushings, which serve as a rotation axis of the moving element.

Inside the cavities in the interior of the openings such as gaps and cut-outs formed between such fixed and moving elements, vortices are usually generated which are responsible for increasing the structural or parasitic drag, as a result of which the sealing thereof must be aimed at reducing the existing opening to the maximum. As the internal (non-aerodynamic) elements are exposed, the air current may become deflected this giving rise to the aforementioned unanticipated behaviors in the air flow. In addition thereto, when there are openings of this type in two parts of the structure separated from each other which are connected to each other, a flow of air is generated on the interior of the structure which, at the outlet opening, may cause flow separations, thus reducing the aerodynamic efficiency, it therefore being necessary for the sealing of such openings to cover the largest part possible thereof in order to create an effective barrier which will restrain or even block this flow of air.

To overcome the aerodynamic problems caused by spaces and openings located between moving elements and fixed elements, different types of covers, also known as seals, have been conceived.

A first type of such seals are non-reinforced tongue-shaped seals, covered with low-friction polyester fabric. Although these seals are capable of withstanding major deflections, their lack of reinforcement may lead, under certain conditions, such as, for example, at high cruising speeds, to a flapping of the tongue being caused, thus reducing its efficiency and possibly having a negative effect on the aerodynamics. In addition thereto, in the movements in which the friction against the moving surface tends to contract the seal, blockages may occur, especially if there are grime build-ups.

A second type of seal is a tongue-shaped seal with internal cloth reinforcement, covered with low-friction polyester fabric, which, although it improves the negative aspects of the non-reinforced tongue-shaped seals, entails the drawback of the reinforcement provided by the cloth not being sufficient to reduce the aforementioned flapping to the desired levels. In this way, patent reference GB 2323576 discloses a flexible seal member made of composite sheet rubber or rubber-like material with a plurality of fiberglass reinforcing plies.

A third type of seal is the tongue-shaped seal with integrated plastic or metal reinforcement, covered by low-friction fabric, which, although having a suitable rigidity, needs an auxiliary structure for supporting the seal, as a result of which, although positively solving the aerodynamic problems, it is of an unacceptable structural weight.

It was therefore desirable to develop a cover which would provide for an effective sealing of the spaces and openings of the above-mentioned type, which would reduce the structural or parasite drag to the maximum degree and would prevent unanticipated behaviors of the airflow, with a controllable rigidity in order to withstand the major deflections without undergoing any flapping, attached to the adjacent structure integrated into the cover, which would stand out beyond the aerodynamic contour to a minimum degree, would be highly resistant to weathering and would provide a good degree of aesthetic finishing, given that it would have to be visible from the outside.

### DESCRIPTION OF THE INVENTION

It is an object of the present invention to overcome the drawbacks of prior art stated hereinabove by means of a reinforced cover for openings, such as gaps and cut-outs, in the aerodynamic contour of a vehicle, particularly for an aircraft, which comprises a first attachment section attachable to a structural element of the vehicle by attachment means, a second elastic tongue-shaped section with an extension which covers at least partially an existing opening between two parts of the outer surface of a vehicle, such as, for example, a fixed part and a moving part of the vehicle, and with a free end which ends on the outer surface of the moving part, reinforcement means, and a layer of low sliding friction, such as, for example, a layer of polyester fabric, which covers at least partially the inner surface of the second section, a main internal body of an elastic material, such as, for example, silicone rubber, in which cover
the reinforcement means comprises at least one fiberglass layer formed at the outer surface of the first section, and in at least an area adjacent to the first section of the outer surface of the second section;
the first section extends in a first axial plane, and the second section extends in a second axial plane, the first axial plane being different from the second axial plane; and
the area adjacent to the second section comprises a transition section which joins the first section to the second section.

According to the invention, the thickness of the fiberglass layer may be variable in terms of the stresses to which the first and the second sections are exposed.

The areas which require maximum reinforcement are usually the first section and the adjacent section, given that, on one hand, the first section corresponds to the attachment area, in other words, for attaching the cover to the fixed structural element of the vehicle, whilst the adjacent area which includes the aforementioned transition plane, is the area which includes the bending axis of the second section with regard to the first plane and, therefore, is subjected to continued bending stress. Therefore, the thickness of the fiberglass layer in the second section preferably decreases in direction towards the free end of the second section and, more preferably, the thickness of the fiberglass layer in the aforementioned adjacent area decreases progressively from the transition section towards the free end of the second section. In the other areas of the cover, the fiberglass layer is thinner, which makes it possible to reduce the total weight of the cover, which is especially important in aircraft.

The fiberglass layer forming the reinforcement of the cover of the present invention may be a stratified layer comprised of a plurality of fiberglass cloths that are piled up and glued together in a manner conventional per se. In those areas in which the reinforcement must be thicker, more cloths being suitably cut to patterns which determine the size and shape of each one of said cloths, are piled up.

The reinforcement which comprises the fiberglass layer of the cover of the present invention provides substantial advantages over the conventional reinforcements comprised of plastic or metal elements. Thus, first of all, with regard to the process of manufacturing the cover of the present invention, the different thicknesses required in the different areas of the cover and which allow to leave out reinforcement thicknesses in those areas which are not subjected to substantial stresses, are readily achieved by varying the thickness of the fiberglass layer, which contrasts with the need of achieving the different thicknesses by means of molding the plastic reinforcing elements and with the need of achieving the different thicknesses at the metal reinforcements for example by means of chemical milling.

In addition thereto, the use of fiberglass as a composite reinforcing material enhances, as compared to conventional reinforcements such as carbon fiber, galvanic compatibility of materials thus reducing the possibility of corrosion if mounted on aluminum components which are attacked by carbon fiber. On the other hand, also the galvanic incompatibility which the conventional metal reinforcement elements have against carbon elements which are part of many components of vehicles and particularly of aircraft, is avoided.

Another advantage of the fiberglass being used at the outside of the cover of the present invention is the fact that that outside can be painted, therefore increasing its resistance to weathering and noticeably improving the aesthetic finish of the cover, thus being susceptible of being an element which provides continuity to the paint pattern of the vehicle, whereby the requirements to the selected paint system (primer and finishing coating) are compatibility with fiberglass composite material, suitability to aerodynamic contour (high-solid finish) and a high degree of flexibility in order not to deteriorate with the flexions of the sealing.

In the aforesaid area adjacent to the first section, also the elastic member may, for the purpose of providing a suitable degree of bending strength, conveniently be of a thickness which increases progressively along the transition section and which decreases in the direction towards the free end of the second section.

In an embodiment of the cover of the present invention, the transition section extends along a slanted longitudinal axis which connects said first axial plane to said second axial plane. The slant of the outer surface of the transition section is not necessarily the same as that of the inner surface of said section. Thus, the slant of the outer surface may be the same as that of a beveled edge of the outer surface of the fixed part of the vehicle, whilst the interior slant may be slanted to a greater degree for the purpose of increasing the thickened area of the elastic member.

According to the invention, the first section of the cover may be in the shape of an attachment tab, whilst the second section may, in accordance with an embodiment which is especially useful for covering cover a gap between an fixed part and a moveable part, be of a rectangular configuration. In this embodiment, the edge of the free end of the second section may be provided with a protruding edge which respectively extends from the sides towards the center of the first area. This protruding edge may be a padded rib and it contacts the outer surface of the section to which the cover is not fixed, as for example, the moving part of the vehicle. The protruding edge may have a convexly curved cross-section.

In another embodiment which is especially suitable for, in addition to a gap between a fixed part and a moving part, covering a cut-out in the moving part, the second section of the cover has two areas, following the adjacent section in direction towards the free end thereof, namely, a first area with a tongue of a length compatible with other sealing solutions within the aerodynamic contour, with the option of including a rounded protruding bottom edge for contact with the moving part, and a second area, narrower than the first area, extended beyond the aerodynamic contour of sufficient size to cover the cut-out between the fixed surface and the moving surface, which may lack such an projecting edge so as to minimize projections beyond the aerodynamic contour. Integrating these two areas in the same cover provides a smooth transition between the same, thus making it possible to improve the aerodynamic precision. In accordance with this embodiment, the first area may be provided with respective protruding edges which each respectively extend from the sides towards the center of the first area. These protruding edges may also be padded ribs, and contact the outer surface of the moving part of the vehicle, and may be spaced apart from each other by a distance substantially equal to the transversal extension of the base of the second area. The protruding edges may have a convexly curved cross-section. A suitable shape of this second area is for example a trapezoidal shape.

In a preferred embodiment of the invention, the cover comprises a main silicone rubber body and has a first tongue-shaped section and a second section in the form of an integrated tab for attachment to an adjacent structural element. The elastic member is reinforced at its outer (aerodynamic) side with a fiberglass layer with a high-level surface finish and covered on its inner side (contact with moving part) in a low-friction polyester fabric.

According to an embodiment of the cover of the present invention especially useful for aircraft and, particularly for covering the openings at the elevators and rudders and at the flaps of the type described hereinabove, the first section which forms the attachment tab is stage-shaped for bolting it to a structural element such as a metal or carbon fiber panel, with a bevel on its inner surface for housing the stage. The rigidity of this tab, achieved with greater thicknesses of the fiberglass layer, allows for it to be easily mechanized, such that interferences are avoided and the integration thereof into the structure is facilitated. Likewise it allows the attachment elements, such as rivetable nuts, to be mounted thereat, so that no additional metal profile as is usually used for preventing rips in the cloth-reinforced seals, is needed for reinforcing the attachment. This alternative is suitable in cases where it is desired to remove the seal without the need of accessing the inside of the structure, as the seal itself retains the nut without any need of using a spanner, which would be necessary for conducting inspections of the assembly of fittings supporting the moving aerodynamic surface. The tab can also take an attachment made directly using conventional bolt, nut and washer.

### BRIEF DESCRIPTION OF THE DRAWINGS

In the following some practical embodiments of the elements are described on the basis of some figures in which
Figure 1 is a schematic top plan view of the tail section of an aircraft with elevators at which a cover in accordance with a first embodiment of the invention is applicable for sealing gaps;
Figure 2 is a schematic top plan view of the area marked with a circle in figure 1;
Figure 3 is a schematic cross-section view along line A-A" shown in figure 2.
Figure 4 is a schematic more detailed top plan view of the cover shown in figure 2.
Figure 5 is a schematic partially-sectioned top plan view showing the position of the cover in figures 2 and 4 with greater detail.
Figure 6 is a schematic side view along line B-B' shown in figure 4.
Figure 7 is a schematic top plan view of the backward section of an aircraft to which a cover especially suitable for sealing cut-outs is applicable;
Figure 8 is a schematic top plan view of the area marked with a circle in figure 7, corresponding to the area in which an elevator catch is located;
Figure 9 is a schematic cross-section view along the C-C' line shown in figure 8.
Figure 10 is a schematic top plan view of the cover shown in figure 9.
Figure 11 is a schematic partially sectioned view providing greater detail of the position of the cover in figures 8 and 10 at the catch of an aircraft elevator.
Figure 12 is a schematic cross-sectioned side view along line D-D' shown in figure 11.
Figure 13 is a partial schematic cross-sectional view along line E-E' of the cover corresponding to figure 12 which shows how the cover is arranged on the surface of the elevator in an inactive position;
Figures 14 and 15 are schematic side views showing how the cover shown in figure 13 adapts to two different positions of the elevator.

In these figures there are references identifying the following elements:
- 1: cover
- 1a: first attachment section
- 1b: outer surface of the first section
- 1c: second section
- 1d: free end of the second section
- 1e: inner surface of the second section
- 1f: adjacent area of the second section to the first section
- 1g: transition section
- 1h: inner protruding edge
- 1i: first area of the second section
- 1j: second area of the second section
- 1k: outer surface of the second section
- 2: structural element of the vehicle
- 3a: gap
- 3b: cut-out
- 4: inside of the moving part
- 5: fixed part
- 5a: outer surface of the fixed part of the vehicle
- 6: moving part of the vehicle
- 6a: outer surface of the moving part
- 7: reinforcement means
- 7a: fiberglass layer
- 8: low-friction layer
- 9: main interior body of elastic material
- 10: attachment means for attaching the first section to the structural element
- 11: vehicle (aircraft)
- 12: elevator
- 12a: curved section of the elevator
- 13: fitting at the fixed structure
- 14: fitting at the moving structure
- 15: bolt
- 16: throughhole in the attachment section
- I: first axial plane
- II: second axial plane
- III: longitudinal axis

### EMBODIMENTS OF THE INVENTION

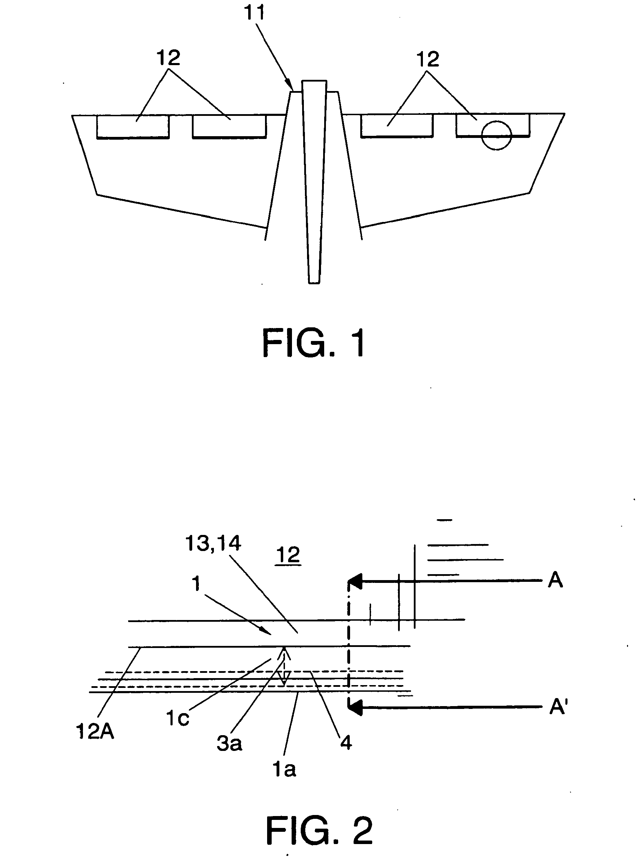

Figure 1 shows the tail section of an aircraft where there are located elevators 12 which are articulated to the fixed structure of the aircraft by per se conventional catches. For tilting the elevator 12 with respect to the fixed part of the elevator of the aircraft, there is usually a gap 3a between the curved part 12a of the elevator 12 and the surface 5a of the fixed structure 5. This gap 3a is aerodynamically a drawback given that a flow of air may blow into the open space inside the elevator through this gap, causing turbulences resulting in greater drag. Likewise, the flow of air entering the inside 4 of the elevator through the gap 3a may drag water and foreign objects along with it, which may cause wearing-out and even damage to the elements located in the inside of the elevator. The reinforced cover of the present invention can be used for covering these gaps.

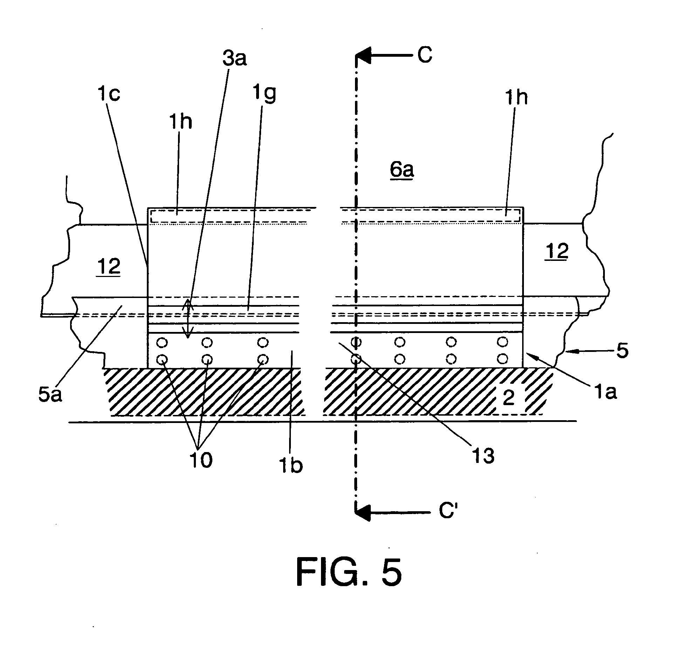

Thus, as shown in figures 2 to 6, the cover 1 of the present invention is mounted for covering the gap 3a located between the curved front part 12a of the elevator 12 and the surface 5a of the fixed structure 5, so as to prevent an air current from flowing into the open space 4 between the fixed structure 2 of the elevator and the moving structure of the elevator through the gap 3a, such that there is no airflow entering towards the inside of the elevator.

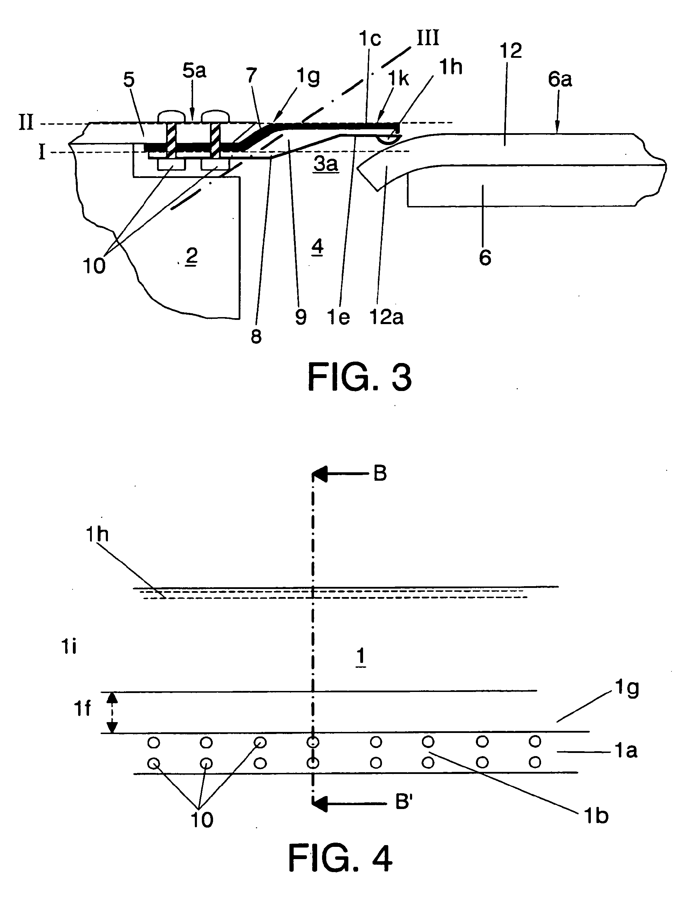

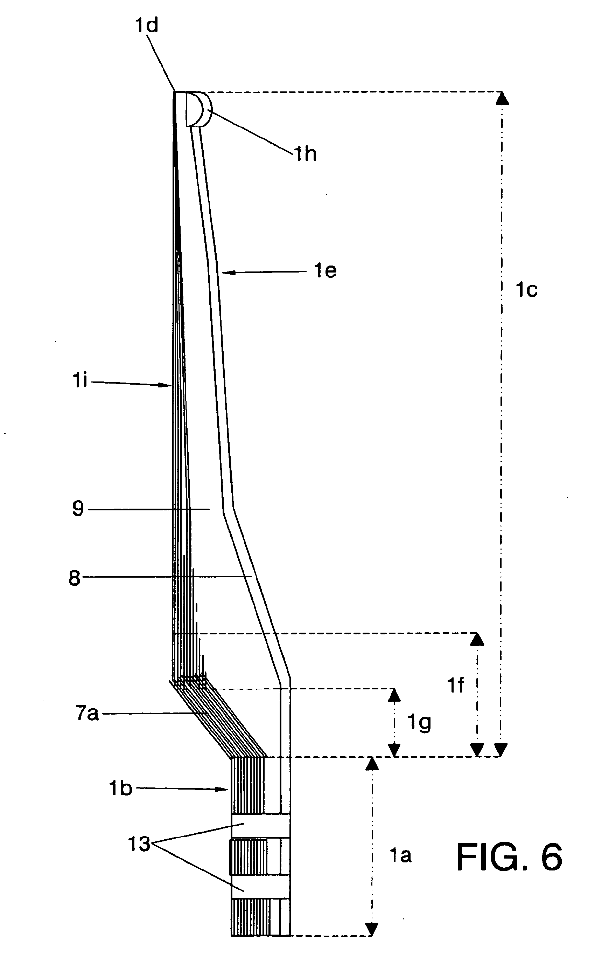

The cover 1 comprises of a first attachment section 1a shaped in the form of an attachment tab, and a second section 1c which covers the gap by resting on the surface 6a of the elevator 12. As shown in figure 3, the cover 1 is joined to the fixed structure of the elevator by attachment elements including bolt/washer/nut assemblies 10, which are inserted into throughholes 16 (see figure 6) through both the attachment tab 1a and the fixed part 5 which consists of a portion of an exterior panel which is joined, in turn, to a structural element 2 of the elevator.

Between the attachment tab 1a and the second section 1c of the cover there is a transition section 1g which allows the tab 1a and the second section 1c to be respectively located in axial planes I and II. The first axial plane I is located at the level of the inner surface of the external panel 5, whilst the second axial plane II is located at the level of the outer surface 5a of the external panel 5. In turn, the transition section 1g extends along a slanted longitudinal axis which extends from said first axial plane I up to said second axial plane II.

By means of this configuration, it is thus possible for the outer surface of the second section 1c to flush with the surface 5a of the panel 5, and for the attachment tab to be anchored to the inner surface of the panel 5.

As particularly shown in figure 4, the second section 1c has a rectangular configuration and extends from the adjacent area 1f up to the free end 1d, where it is provided on its inner surface with a padded protruding edge 1h of a convexly curved cross-section. This edge 1h contacts, as shown in figure 3, the outer surface 6a of the curved section 12a of the elevator 12.

Figures 3 and 6 illustrate that the cover comprises an elastic member 9 made of silicone rubber, clad on the outside with reinforcement 7, and on the inside with a low-friction layer 8 of polyester fabric. The reinforcement 7 is a fiberglass layer 7a, variable in thickness in terms of the stresses to which the first and the second section 1a, 1c are exposed. These stresses are greater at the first section 1a corresponding to the attachment tab due to that the anchoring points of the attachment means 10 being located there and at the transition section due to that this is where bending stress is caused in view of the fact that the bending axis between the immobilized section comprised of the attachment tab 1a and the free end 1d of the second section 1c is located in the transition section. Therefore the thickness of the fiberglass layer 7a in said first section 1a and in said adjacent area 1f of the second section 1c is greater than the thicknesses at the rest of the cover, and progressively decreases from the transition section 1g towards the free end 1d of the second section 1c. In turn, in the adjacent area 1f, the elastic member 9 is of a thickness which progressively increases along the transition section 1g and decreases in the direction towards the free end 1d of said second section 1c.

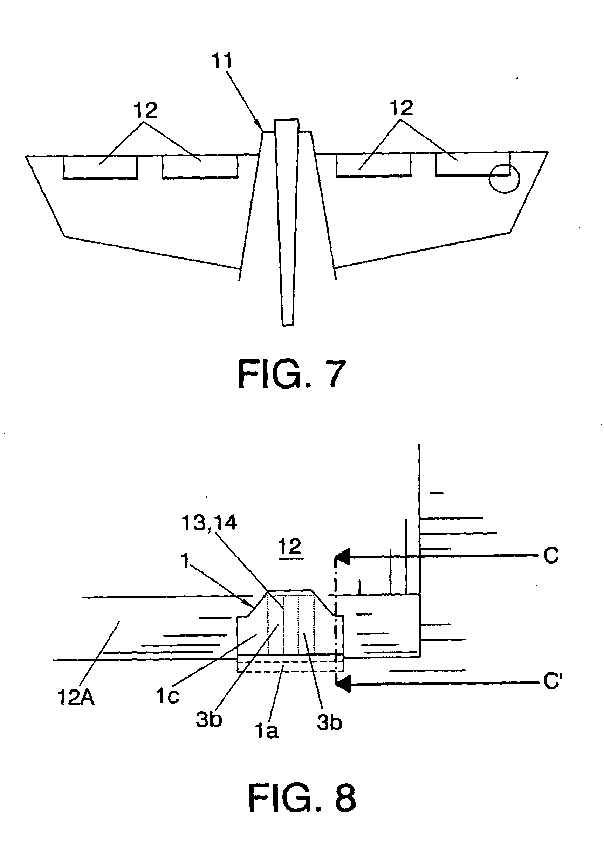

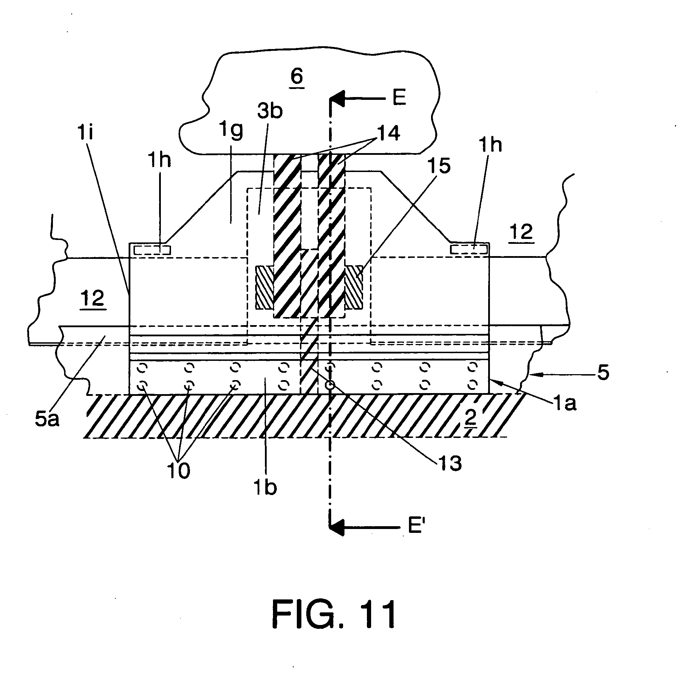

The embodiment illustrated in figure 6 shows how the cover made of fiberglass 7a which forms the reinforcement is a stratified layer made of a plurality of piled-up and per se conventionally glued-together fiberglass cloths. In those areas in which the reinforcement must be thicker, specifically in the attachment section 1a, the adjacent area 1f and in the transition section 1g, the number of piled-up cloths is greater than in the rest of the reinforcement. Each of these cloths has been suitably cut to a pattern determining their size and shape in order for it to be possible for them to be piled up in the proper area. Figure 7 shows the tail section of an aircraft where elevators 12 are located, being articulated to the fixed structure of the aircraft by means per se conventional catches. As shown in Figs 2 and 11, these catches are fittings 13, 14 coupled to each other by means of a bolt 15, respectively joined to the fixed structure of the elevators of the aircraft and to the moving structure of the elevators 12. In order to allow the tilting of the elevator 12 with respect to the fixed part of the aircraft elevator, a cut-out 3b is conventionally located on the curved part 12a of the elevator 12. This cut-out 3b is aerodynamically a drawback given that a flow of air may blow into the hollow inside the elevator through this cut-out, causing turbulences resulting in greater drag. Likewise, the flow of air entering inside the elevator through the cut-out 3b may carry water and foreign objects along with it, which may cause wearing-out and even damage to the elements located inside the elevator. This problem obviously becomes greater the larger the number of catches and therefore the greater the number of cut-outs 3b existing in the elevator. The reinforced cover of the present invention can be used for covering these cut-outs 3b.

Thus, as is shown in figures 2 to 6, the cover 1 of the present invention is mounted for covering the cut-out 3b located in the curved anterior part 12a of the elevator 12, so as to prevent an air current from flowing into the hollow 4 between the fixed structure 2 of the elevator and the moving structure of the elevator 12 through gap 3a and the cut-out 3b, such that no air current will flow inside towards the interior of the elevator.

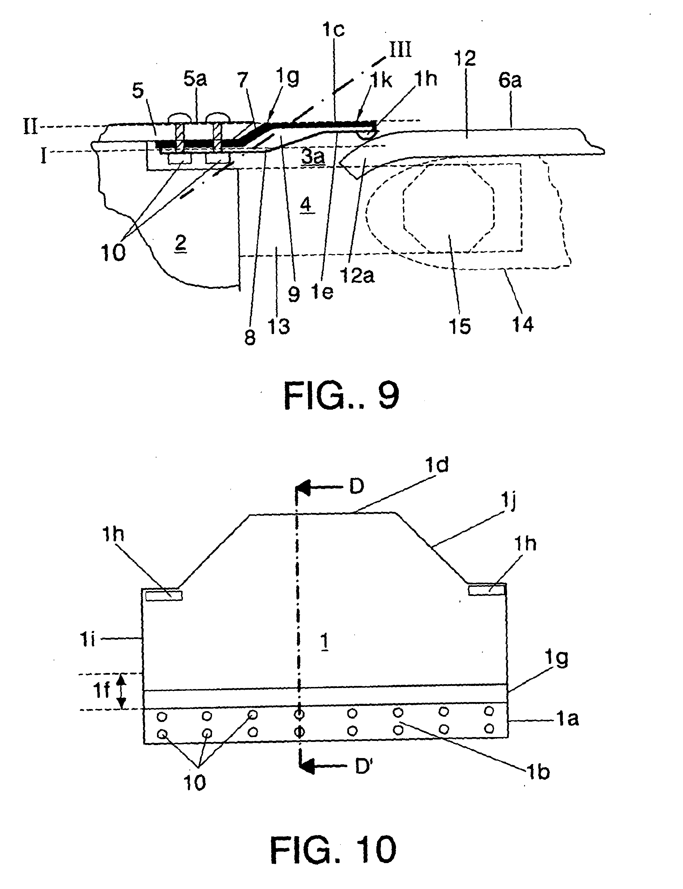

Cover 1 comprises a first attachment section 1a shaped in the form of an attachment tab, and a second section 1c which covers the hollow 3 by resting on the surface 6a of the elevator 12. As is shown in figure 9, the cover 1 is joined to the fixed structure of the elevator by catching elements including bolt/washer/nut assemblies 10, which pass through throughholes 16 through both the attachment tab 1a and the fixed part 5 which is constituted by a portion of an exterior panel which is joined, in turn, to a structural element 2 of the elevator.

Between the attachment tab 1a and the second section 1c of the cover there is a transition section 1g which allows the tab 1a and the second section 1c to be respectively located in axial planes I and II. The first axial plane I is located at the level of the inner surface of the external panel 5, whilst the second axial plane II is located at the level of the outer surface 5a of the external panel 5. In turn, the transition section 1g extends along a slanted longitudinal axis, which extends from said first axial plane I up to said second axial plane II.

By means of this configuration, it is thus possible for the outer surface 1k of the second section 1c to be flush with the surface 5a of the panel 5, and for the attachment tab 1a to be anchored to the inside of the panel 5.

As is particularly shown in figure 10, the second section 1c has a first area 1i in a rectangular-shaped configuration which extends from the adjacent area 1f of a first cross-section, and a second area 1j with a smaller cross-section than the cross-section of the first area li, which extends up to the free end 1d. This second area 1j is trapezoidal and has a base of a lesser transversal extension than the cross-section of the first area 1i. The first area 1i has both padded protruding edges 1h on its inner surface which are of a curved convex cross-section, extending respectively from the sides up to the center of the first area 1i. These edges 1h contact, as is shown in figure 9, the outer surface 6a of the curved section 12a of the elevator 12 and are spaced apart from each other at a distance substantially equal to the transversal extension of the base of the second area 1j.

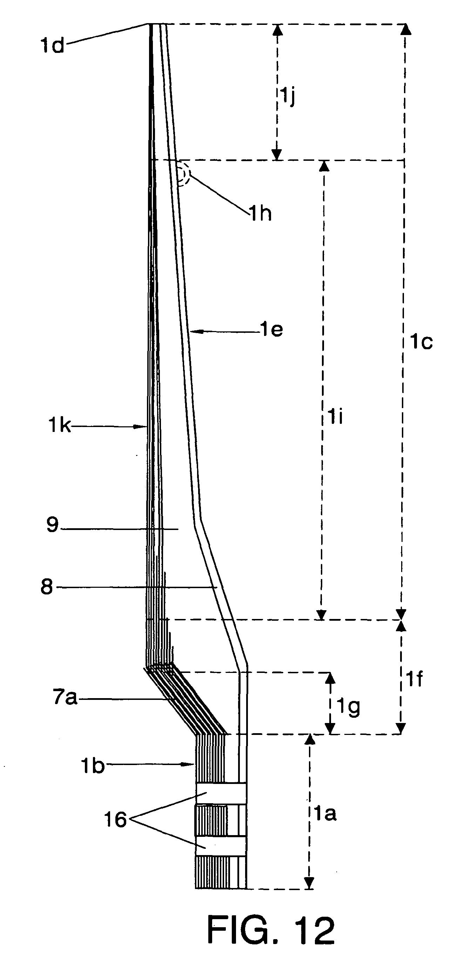

Figures 9 and 12 illustrate that the cover includes an elastic member 9 made of silicone rubber, coated on its outer surface with a reinforcement 7, and on its inner surface with a low-friction layer 8 of polyester fabric. The reinforcement 7 is a fiberglass layer 7a, variable in thickness in terms of the stresses to which the first and the second section 1a, 1c are exposed. These stresses are greater at the first section 1a corresponding to the attachment tab as a result of the anchoring points of the attachment means 10 being located there and at the transition section 1g given that this is where bending stress is caused in view of the fact that the bending axis between the immobilized section which comprises the attachment tab 1a and the free end 1d of the second section 1c is located in the transition section 1g. Therefore, the thickness of the fiberglass layer 7a at said first section 1a and on said adjacent area 1f of the second section 1c is greater than the thickness at other sections of the cover, and progressively decreases from the transition section 1g towards the free end 1d of the second section 1c. In turn, in the adjacent area 1f, the elastic member 9 is of a thickness which progressively increases along the transition section 1g and decreases in the direction towards the free end 1d of said second section 1c.

The embodiment illustrated in figure 12 shows how the layer made of fiberglass 7a which forms the reinforcement is a stratified layer made of a plurality of piled-up fiberglass cloths that are glued to each other in a per se conventional manner. In those areas in which the reinforcement must be thicker, specifically at the attachment section 1a, the adjacent area 1f and at the transition section 1g, the number of piled-up cloths is greater than in other sections of the reinforcement. Each one of these cloths has been suitably cut to a pattern determining their size and shape in order for it to be possible for them to be piled-up in the proper area.

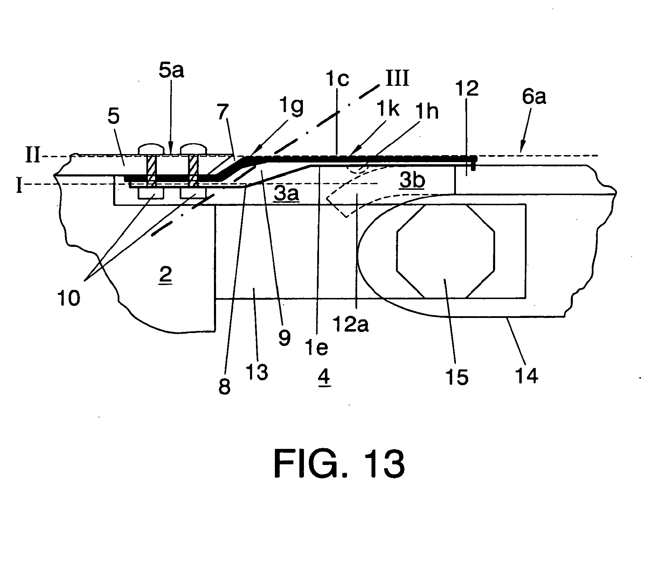

Figures 13 to 15 illustrate the manner in which the cover adapts to the tilting of the elevator 12. Thus, figure 7 shows the cover when the elevator 12 is in horizontal position. In this position, the second section 1c rests on the padded edges which are shown in figures 9 to 11.

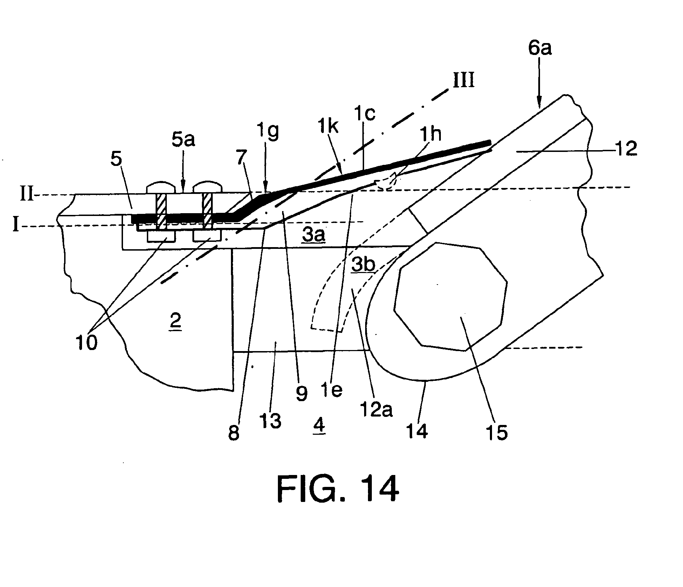

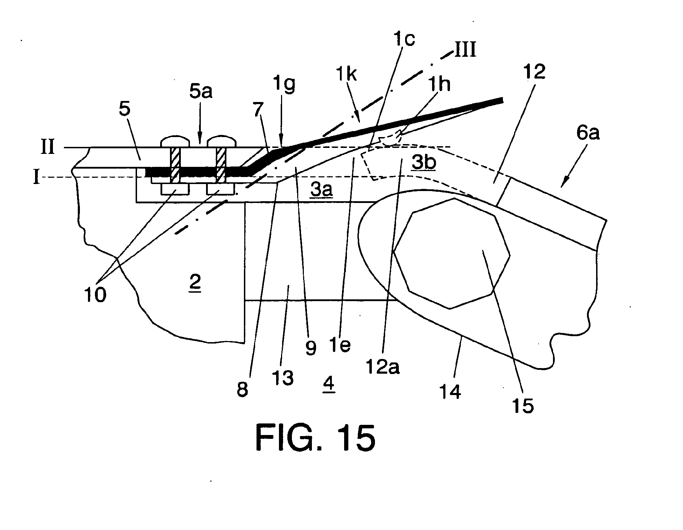

In an ascending maneuver, the elevator 12 progressively pushes the free end 1d of the second section 1c of the cover upward until the second section 1c adopts the position shown in figure 14. Apart therefrom, in a descending maneuver of the aircraft, it is the front curved section 12a of the elevator which, on its surface 6a coming into contact with the padded edges 1h, progressively moves the free end 1d of the second section 1c upward until the second section 1c of the cover adopts the position shown in figure 15.

As shown in figures 7-15, in any of the positions, the cover perfectly covers the cut-out 3b and, therefore deflects the air currents such that they cannot flow through said cut-out 3b into the hollow 4 inside of the elevator. Apart from this, it is shown how the greater thickness of the elastic member 9 and of the reinforcement 7 at the transition section 1g enables the cover to suitably bend whilst the reinforcement 7 prevents the flapping of the second section 1c.

For the use for sealing openings at aircraft elevators, suitable fiberglass cloths for obtaining the fiberglass layer of the cover of the present invention are, for example, continuous filament fiberglass cloths, impregnated with epoxy resin, in accordance with the following specifications which are quoted herein as an example in the following Table:

**Table 1**

| Characteristic | Specifications |
|---|---|
| Fiberglass | 100% |
| epoxy resin | E644 |
| density | 1.4 |
| impregnation rate | 43% |
| Finished cloth | |
| size (cm) | 100 |
| Weight (g/m2) | 290 - 320 |
| Thickness (mm) | 0.2 - 0.3 |
| Tensile strength (Mpa) | > 30 |
| Bending strength (Mpa) | 50 - 55 |

On the other hand, the low-friction layer may be made from polyester fabrics which, as an example, may be of specifications such as those specified in the following Table:

**Table 2**

| Characteristic | Specifications |
|---|---|
| Type of polyester | LFT with silicone coating |
| Type of weave | Warp fabric |
| Type of filament | Continuous 55/56 decitex |
| Weave | 18 threads chain |
| | 19 threads weft |
| Weight (g/m2) | 200 - 500 |
| Thickness (mm) | 0.3 - 0.5 |
| Tensile strength (daN/5 cm) | > 45 |
| Ultimate elongation | > 65 |
| Breaking strength (bar) | > 10 |

Apart from the above, the interior body may be made out of silicone rubber of the characteristics such as those which are specified for purpose of example in the following Table:

**Table 3**

| Characteristic | Specifications |
|---|---|
| Hardness | 46 - 55 |
| Tensile strength | > 4 |
| Ultimate elongation (%) | approx. 200 |
| Wind shear strength | approx. 9 |
| Density | approx. 1, 2 |

## Claims

1. Reinforced cover for openings in an aerodynamic contour of a vehicle, particularly for an aircraft, comprising
a first section (1a) for securing the cover to an outer panel (5) of a structural element (2) of the vehicle (11) by attachment means (10),
a second section (1c) which is i.n the shape of an elastic tongue and with an extension for at least partially covering an opening (3a,3b) between the outer panel (5) and a moving part (6, 12) of the vehicle (11), and with a free end (1d) which ends on said moving part (6, 12).
reinforcement means (7),
a low friction layer (8) which at least partially covers the under surface (1a) of said second section (1c),
the first section (1a) is securable on the under surface of the outer panel (5) and the outer surface (11) of the second section (1c) is adapted to flush with an outer surface (5a) of the outer panel (b) and to extend towards a free end (1d) as a continuation of said outer surface (5a) of the outer panel (5) ; **characterized in that**:
the reinforcement means comprises a reinforcement member (7) with at least one fiberglass layer (7a) having a thickness and formed at the outer surface (1a) of the first section (1a) and in at least an adjacent area (1f) to said first section (1a) of the outer surface (1i) of said second section (1c) ; said reinforcement member (7) in the first section (1a) extending substantially in a first axial plane (I) and in the second section (1c) extending substantially in a second axial plane (II), said first axial plane (I) being different from said second axial plane (II) ;
said adjacent area (1f) uf the second section (1c) comprises a flexible transition section (1g) between said first section and said second section (1c);
the cover comprising an elastic member (9) connected on the under surface of the reinforcement member (7) in the flexible transition section (1g) of the second section (1c)in at least the adjacent area (1f); and
the outer surface (1i) of the second section is adapted to flush with the outer surface (5a) of the fixed part (2) of the vehicle and extends towards the free end (1d) as a continuation of said outer surface (5a).

2. Reinforced cover according to claim 1, **characterized in that**
said opening is a gap (3), and that the second section (1c) covers at least a portion of said gap.

3. Reinforced cover according to claim 2, **characterized in that** said opening further comprises a cut-out (3b), **in that** the second section (1c) of the cover comprises a first area (1i) which extends from said adjacent area (1f) with a first cross-section, and a second area (1j) with a second cross-section smaller than the cross-section ot the first area (1a) and which extends towards said free end (1d), and **in that** said first area (1i) covers at least said gap (3a) and **in that** second area (1j) covers at least a portion of said cut-out (3b) such that the cut out (3b)is covered by at least a portion of said first area (1i) and a portion of said second area (1j).

4. Reinforced cover according to claim 1, 2 or 3, **characterized in that** the fiberglass layer (7a) comprises a plurality of piled-up and glued-together fiberglass cloths, the thickness of the fiberglass layer (7a) being determined by the number of piled-up fiberglass cloths.

5. Cover according to claim 1, 2 or 3, **characterized in that** the thickness of the fiberglass layer (7a) is greater at areas of said first and said second section (1a, 1c) which are exposed to greater stresses, than in areas subjected to lesser stresses.

6. Cover according to claim 4, **characterized in that** the fiberglass layer (7a) comprises a larger number of piled up glass cloths in areas of said first and said second section (1a, 1c) which are exposed to greater stresses, than in areas subjected to lesser stresses.

7. Cover according to claim 1, 2, 3, 4 or 5, **characterized in that** the thickness of the fiberglass layer (7a) in said first section (1a) and in said adjacent area (1f) of the second section (1c) is greater than the thickness of the fiberglass layer in other sections of the cover (1).

8. Cover according to claim 4 or 6, **characterized in that** the fiberglass layer (7a) comprises a larger number of piled-up fiberglass cloths in said first section (1a) and in said adjacent area (1f) of the second section (1c) than in other sections of the cover (1).

9. Cover according to any of claims 1 to 8, **characterized in that** the thickness of the fiberglass layer (7a) on the second section (1c) decreases in the direction towards the free end (1d) of said second section (1c).

10. Cover according to claim 4, 6 or 8, **characterized in that** the number of piled-up fiberglass cloths in the second section (1c) decreases in the direction towards the free end (1d) of said second section (1c).

11. Cover according to claim 1, **characterized in that** the thickness ot the fiberglass layer (7a) in said adjacent area (1f) decreases progressively from the transition section (1g) towards the free end (1d) of the second section (1c).

12. Cover according to claim 4, **characterized in that** the number of piled-up fiberglass cloths in said adjacent area (1f) decreases progressively from the transition section (1g) towards the Free end (1d) of the second section (1c),

13. Cover according to claim 1, 11 or 12, **characterized in that** the transition section (1g) extends along a slanted longitudinal axis which extends from said first axial plane (I) to said second axial plane (II).

14. Cover according to claim 1, 11, 12 or 13, **characterized in that**, in said adjacent area (1f), the elastic member (9) is of a thickness which progressively increases in said transition section (1g) and decreases in the direction towards the free end (1d) of said second section (1c).

15. Cover according to claim 1, **characterized in that** the free end (1d) of the second section (1c) has, at least partially, a lower protruding edge (1h) adapted to contact with the outer surface (6a) of said moving part (6, 12) of the vehicle (11).

16. Cover according to claim 15, **characterized in that** each protruding edge (1h) has a convexly curved cross-section.

17. Cover according to claim 3, **characterized in that** said second area (1c) is trapezoidal.

18. Cover according to claim 17, **characterized in that** said trapezoidal second area (1c) has a base having a cross-section that is smaller than the cross section of the first area (1a).

19. Cover according to claim 18, **characterized in that** the first area (1a) has two protruding edges (1h) which respectively extend from the sides towards the center of the first area (1i), and which are adapted to be in contact with the outer surface (6a) of said moving part (6) of the vehicle (11), said protruding edges (1h) being spaced apart from each other by a distance substantially equal to the transversal extension of the base or said second area (1c).

20. Cover according to claim 1, **characterised in that** the material of the elastic member (9) is silicone rubber.

21. Cover according to claim 1, **characterized in that** the low-friction layer (8) is made of polyester fabric.

22. Cover according to claim 1, **characterized in that** said first section (1a) is shaped in the form of an attachment tab.

23. Reinforced cover according to claim 1, **characterized in that** at least the outer surface (1i) of said second section (1c) is coated with paint.

24. Reinforced cover according to claim 1, **characterized in that** the outer surface of the cover is coated with paint.

25. Reinforced cover according to claim 1, **characterized in that** the first attachment section (1a) comprises at least one throughhole (16) for receiving the attachment means (10).

26. Reinforced cover according to claim 25, **characterized in that** the attachement means (10) are selected from rivets, nutbolt assemblies and bolt-rivetable nut assemblies.

## Patentansprüche

1. Verstärkte Abdeckung für Öffnungen in einem aerodynamischen Profil eines Fahrzeugs, insbesondere eines Flugzeugs, umfassend
einen ersten Abschnitt (1a) zum Befestigen der Abdeckung an einer Außenplatte (5) eines Bauteils (2) des Fahrzeugs (11) mit Befestigungsmitteln (10),
einen zweiten Abschnitt (1c) in Form einer elastischen Zunge und mit einer Erweiterung zum zumindest partiellen Abdecken einer Öffnung (3a, 3b) zwischen der Außenplatte (5) und einem beweglichen Teil (6, 12) des Fahrzeugs (11), und mit einem freien Ende (1d), welches an dem beweglichen Teil (6, 12) endet,
Verstärkungsmittel (7),
eine reibungsarme Schicht (8), die zumindest partiell die Unterseite (1a) des zweiten Abschnitts (1c) abdeckt,
wobei der erste Abschnitt (1a) an der Unterseite der Außenplatte (5) befestigt werden kann und die Außenfläche (1i) des zweiten Abschnitts (1c) angepasst ist, um bündig mit einer Außenfläche (5a) der Außenplatte (5) abzuschließen und sich als Fortsetzung der Außenfläche (5a) der Außenplatte (5) in Richtung eines freien Endes (1d) zu erstrecken; **dadurch gekennzeichnet, dass**:
das Verstärkungsmittel ein Verstärkungselement (7) mit mindestens einer Glasfaserschicht (7a) umfasst, die eine Dicke aufweist und an der Außenfläche (1a) des ersten Abschnitts (1a) und in mindestens einer an den ersten Abschnitt (1a) der Außenfläche (1i) des zweiten Abschnitts (1c) angrenzenden Fläche (1f) gebildet ist; wobei sich das Verstärkungselement (7) in dem ersten Abschnitt (1a) im Wesentlichen in eine erste Axialebene (I) erstreckt und in dem zweiten Abschnitt (1c) im Wesentlichen in eine zweite Axialebene (II) erstreckt, wobei sich die erste Axialebene (I) von der zweiten Axialebene (II) unterscheidet;
die angrenzende Fläche (1f) des zweiten Abschnitts (1e) einen flexiblen Übergangsabschnitt (1g) zwischen dem ersten und dem zweiten Abschnitt (1c) umfasst;
die Abdeckung ein elastisches Element (9) umfasst, das auf der Unterseite des Verstärkungselementes (7) in dem flexiblen Übergangsabschnitt (1g) des zweiten Abschnitts (1c) in zumindest der angrenzenden Fläche (1f) verbunden ist; und
die Außenfläche (1i) des zweiten Abschnitts angepasst ist, um bündig mit der Außenfläche (5a) des festen Teils (2) des Fahrzeugs abzuschließen, und sich als Fortsetzung der Außenfläche (5a) in Richtung des freien Endes (1d) zu erstrecken.

2. Verstärkte Abdeckung nach Anspruch 1, **dadurch gekennzeichnet, dass** die Öffnung eine Lücke (3) ist, und der zweite Abschnitt (1c) zumindest einen Teil dieser Lücke abdeckt.

3. Verstärkte Abdeckung nach Anspruch 2, **dadurch gekennzeichnet, dass** die Öffnung ferner eine Aussparung (3b) umfasst, der zweite Abschnitt (1c) der Abdeckung eine erste Fläche (1i) umfasst, die sich von der angrenzenden Fläche (1f) mit einem festen Profil erstreckt, und eine zweite Fläche (1j) mit einem zweiten Profil, das kleiner ist als das Profil der ersten Fläche (1a), die sich in Richtung des freien Endes (1d) erstreckt, und **dadurch**, dass die erste Fläche (1i) zumindest die Lücke (3a) abdeckt und die zweite Fläche (1j) zumindest einen Teil der Aussparung (3b) abdeckt, sodass die Aussparung (3b) zumindest von einem Teil der ersten Fläche (1i) und einem Teil der zweiten Fläche (1j) abgedeckt wird.

4. Verstärkte Abdeckung nach Anspruch 1, 2 oder 3, **dadurch gekennzeichnet, dass** die Glasfaserschicht (7a) eine Vielzahl aus übereinandergeschichteten und verklebten Glasfasergeweben umfasst, wobei die Dicke der Glasfaserschicht (7a) durch die Anzahl der übereinandergeschichteten Glasfasergewebe festgelegt ist.

5. Abdeckung nach Anspruch 1, 2 oder 3, **dadurch gekennzeichnet, dass** die Dicke der Glasfaserschicht (7a) bei den Flächen des ersten und des zweiten Abschnitts (1a, 1c), die größeren Belastungen ausgesetzt sind, größer ist als bei Flächen, die geringeren Belastungen ausgesetzt sind.

6. Abdeckung nach Anspruch 4, **dadurch gekennzeichnet, dass** die Glasfaserschicht (7a) eine große Anzahl an übereinandergeschichteten Glasfasergeweben bei den Flächen des ersten und zweiten Abschnitts (1a, 1c) umfasst, die größeren Belastungen ausgesetzt sind, als bei Flächen, die geringeren Belastungen ausgesetzt sind.

7. Abdeckung nach Anspruch 1, 2, 3, 4 oder 5, **dadurch gekennzeichnet, dass** die Dicke der Glasfaserschicht (7a) in dem ersten Abschnitt (1a) und der angrenzenden Fläche (1f) des zweiten Abschnitts (1c) größer ist als die Dicke der Glasfaserschicht in anderen Abschnitten der Abdeckung (1).

8. Abdeckung nach Anspruch 4 oder 6, **dadurch gekennzeichnet, dass** die Glasfaserschicht (7a) eine größere Anzahl an übereinandergeschichteten Glasfasergeweben in dem ersten Abschnitt (1a) und in der angrenzenden Fläche (1f) umfasst als in anderen Abschnitten der Abdeckung (1).

9. Abdeckung nach einem der Ansprüche 1 bis 8, **dadurch gekennzeichnet, dass** die Dicke der Glasfaserschicht (7a) an dem zweiten Abschnitt (1c) in Richtung des freien Endes (1d) des zweiten Abschnitts (1c) abnimmt.

10. Abdeckung nach Anspruch 4, 6 oder 8, **dadurch gekennzeichnet, dass** die Anzahl der übereinandergeschichteten Glasfasergewebe in dem zweiten Abschnitt (1c) in Richtung des freien Endes (1d) des zweiten Abschnitts (1c) abnimmt.

11. Abdeckung nach Anspruch 1, **dadurch gekennzeichnet, dass** die Dicke der Glasfaserschicht (7a) in der angrenzenden Fläche (1f) vom Übergangsabschnitt (1g) in Richtung des freien Endes (1d) des zweiten Abschnitts (1c) stufenweise abnimmt.

12. Abdeckung nach Anspruch 4, **dadurch gekennzeichnet, dass** die Dicke der Glasfaserschicht (7a) in der angrenzenden Fläche (1f) vom Übergangsabschnitt (1g) in Richtung des freien Endes (1d) des zweiten Abschnitts (1c) stufenweise abnimmt.

13. Abdeckung nach Anspruch 3, 11 oder 12, **dadurch gekennzeichnet, dass** sich der Übergangsabschnitt (1g) entlang einer geneigten Längsachse erstreckt, welche sich von der ersten Axialebene (I) zu der zweiten Axialebene (II) erstreckt.

14. Abdeckung nach Anspruch 1, 11, 12 oder 13, **dadurch gekennzeichnet, dass** in der angrenzenden Fläche (1f) das elastische Element (9) von einer Dicke ist, die im Übergangsabschnitt (1g) stufenweise zunimmt und in Richtung des freien Endes (1d) des zweiten Abschnitts (1c) abnimmt.

15. Abdeckung nach Anspruch 1, **dadurch gekennzeichnet, dass** das freie Ende (1d) des zweiten Abschnitts (1c) zumindest partiell eine vorstehende untere Kante (1h) aufweist, die angepasst ist, um die Außenfläche (6a) des beweglichen Teils (6, 12) des Fahrzeugs (11) zu berühren.

16. Abdeckung nach Anspruch 15, **dadurch gekennzeichnet, dass** jede vorstehende Kante (1h) ein konvex gekrümmtes Profil aufweist.

17. Abdeckung nach Anspruch 3, **dadurch gekennzeichnet, dass** die zweite Fläche (1c) trapezförmig ist.

18. Abdeckung nach Anspruch 17, **dadurch gekennzeichnet, dass** die trapezförmige zweite Fläche (1c) eine Basis mit einem Profil aufweist, das kleiner ist als das Profil der ersten Fläche (1a).

19. Abdeckung nach Anspruch 18, **dadurch gekennzeichnet, dass** die erste Fläche (1a) zwei vorstehende Kanten (1h) aufweist, die sich jeweils von den Seiten in Richtung Mitte der ersten Fläche (1a) erstrecken und angepasst sind, um die Außenfläche (6a) des beweglichen Teils (6) des Fahrzeugs (11) zu berühren, wobei die vorstehenden Kanten (1h) durch einen Zwischenraum voneinander beabstandet sind, der im Wesentlichen der schrägen Erweiterung der Basis der zweiten Fläche (1c) entspricht.

20. Abdeckung nach Anspruch 1, **dadurch gekennzeichnet, dass** das Material des elastischen Elementes (9) Silikonkautschuk ist.

21. Abdeckung nach Anspruch 1, **dadurch gekennzeichnet, dass** die reibungsarme Schicht (8) aus Polyestergewebe hergestellt ist.

22. Abdeckung nach Anspruch 1, **dadurch gekennzeichnet, dass** der erste Abschnitt (1a) in Form eines Befestigungselementes gebildet ist.

23. Verstärkte Abdeckung nach Anspruch 1, **dadurch gekennzeichnet, dass** zumindest die Außenfläche (1i) des zweiten Abschnitts (1c) mit Farbe überzogen ist.

24. Verstärkte Abdeckung nach Anspruch 1, **dadurch gekennzeichnet, dass** die Außenfläche der Abdeckung mit Farbe überzogen ist.

25. Verstärkte Abdeckung nach Anspruch 1, **dadurch gekennzeichnet, dass** der erste Befestigungsabschnitt (1a) zumindest ein Durchgangsloch (16) zum Aufnehmen des Befestigungsmittels (10) umfasst.

26. Verstärkte Abdeckung nach Anspruch 25, **dadurch gekennzeichnet, dass** das Befestigungsmittel (10) ausgewählt wird aus Nieten, Schraubverbindungen und vernietbaren Schraubverbindungen.

## Revendications

1. Couvercle renforcé pour des ouvertures dans un profil aérodynamique d'un véhicule, en particulier pour un avion, comprenant:
une première section (1a) pour fixer le couvercle à un panneau extérieur (5) d'un élément structurel (2) du véhicule (11) à l'aide de moyens de fixation (10);
une deuxième section (1c) qui se présente sous la forme d'une languette élastique et dont l'étendue couvre au moins partiellement une ouverture (3a, 3b) entre le panneau extérieur (5) et une partie mobile (6, 12) du véhicule (11), et qui comprend une extrémité libre (1d) qui se termine sur ladite partie mobile (6, 12),
des moyens de renforcement (7); et
une couche à frottement réduit (8) qui couvre au moins partiellement la surface inférieure (1a) de ladite deuxième section (1c),
la première section (1a) peut être fixée sur la surface inférieure du panneau extérieur (5), et la surface extérieure (1i) de la deuxième section (1c) est adaptée pour se trouver à fleur d'une surface extérieure (5a) du panneau extérieur (5) et pour s'étendre en direction d'une extrémité libre (1d) en faisant office de prolongement de ladite surface extérieure (5a) du panneau extérieur (5);
**caractérisé en ce que**:
les moyens de renforcement comprennent un élément de renforcement (7) comportant au moins une couche de fibre de verre (7a) qui présente une certaine épaisseur et qui est formée à la surface extérieure (1a) de la première section (1a) et dans au moins une région adjacente (1f) à ladite première section (1a) de la surface extérieure (1i) de ladite deuxième section (1c); ledit élément de renforcement (7) dans la première section (1a) s'étendant sensiblement dans un premier plan axial (I), et dans la deuxième section (1c) s'étendant sensiblement dans un deuxième plan axial (II), ledit premier plan axial (I) étant différent dudit deuxième plan axial (II);
ladite région adjacente (1f) de la deuxième section (1c) comprend une section de transition flexible (1g) entre ladite première section et ladite deuxième section (1c);
le couvercle comprenant un élément élastique (9) qui est connecté sur la surface inférieure de l'élément de renforcement (7) dans la section de transition flexible (1g) de la deuxième section (1c) dans ladite au moins une région adjacente (1f); et
la surface extérieure (1i) de la deuxième section est adaptée pour se trouver à fleur de la surface extérieure (5a) de la partie fixe (2) du véhicule et s'étend en direction de l'extrémité libre (1d) en faisant office de prolongement de ladite surface extérieure (5a).

2. Couvercle renforcé selon la revendication 1, **caractérisé en ce que** ladite ouverture est un espace (3), et **en ce que** la deuxième section (1c) couvre au moins une partie dudit espace.

3. Couvercle renforcé selon la revendication 2, **caractérisé en ce que** ladite ouverture comporte en outre une découpe (3b), **en ce que** la deuxième section (1c) du couvercle comprend une première région (1i) qui s'étend à partir de ladite région adjacente (1f) avec une première section transversale, et une deuxième région (1j) qui présente une section transversale plus petite que la section transversale de la première région (1a) et qui s'étend en direction de ladite extrémité libre (1d), et **en ce que** ladite première région (1i) couvre au moins ledit espace (3a), et **en ce que** ladite deuxième région (1j) couvre au moins une partie de ladite découpe (3b), de telle sorte que la découpe (3b) soit couverte par au moins une partie de ladite première région (1i) et une partie de ladite deuxième région (1j).

4. Couvercle renforcé selon la revendication 1, 2 ou 3, **caractérisé en ce que** la couche de fibre de verre (7a) comprend une pluralité de toiles de fibre de verre empilées les unes sur les autres et collées les unes aux autres, l'épaisseur de la couche de fibre de verre (7a) étant déterminée par le nombre de toiles de fibre de verre empilées.

5. Couvercle renforcé selon la revendication 1, 2 ou 3, **caractérisé en ce que** l'épaisseur de la couche de fibre de verre (7a) est plus grande dans les régions desdites première et deuxième sections (1a, 1c) qui sont exposées à des contraintes plus importantes que dans des régions qui sont soumises à des contraintes moins fortes.

6. Couvercle selon la revendication 4, **caractérisé en ce que** la couche de fibre de verre (7a) comprend un plus grand nombre de toiles de verre empilées dans les régions desdites première et deuxième sections (1a, 1c) qui sont exposées à des contraintes plus importantes que dans des régions qui sont soumises à des contraintes moins fortes.

7. Couvercle selon la revendication 1, 2, 3, 4 ou 5, **caractérisé en ce que** l'épaisseur de la couche de fibre de verre (7a) dans ladite première section (1a) et dans ladite région adjacente (1f) de la deuxième section (1c) est plus grande que l'épaisseur de la couche de fibre de verre dans d'autres sections du couvercle (1).

8. Couvercle selon la revendication 4 ou 6, **caractérisé en ce que** la couche de fibre de verre (7a) comprend un plus grand nombre de toiles de fibre de verre empilées dans ladite première section (1a) et dans ladite région adjacente (1f) de la deuxième section (1c) que dans d'autres sections du couvercle (1).

9. Couvercle selon l'une quelconque des revendications 1 à 8, **caractérisé en ce que** l'épaisseur de la couche de fibre de verre (7a) sur la deuxième section (1c) diminue en direction de l'extrémité libre (1d) de ladite deuxième section (1c).

10. Couvercle selon la revendication 4, 6 ou 8, **caractérisé en ce que** le nombre de toiles de fibre de verre empilées dans la deuxième section (1c) diminue en direction de l'extrémité libre (1d) de ladite deuxième section (1c).

11. Couvercle selon la revendication 1, **caractérisé en ce que** l'épaisseur de la couche de fibre de verre (7a) dans ladite région adjacente (1f) diminue progressivement à partir de la section de transition (1g) en direction de l'extrémité libre (1d) de la deuxième section (1c).

12. Couvercle selon la revendication 4, **caractérisé en ce que** le nombre de toiles de fibre de verre empilées dans ladite région adjacente (1f) diminue progressivement à partir de la section de transition (1g) en direction de l'extrémité libre (1d) de la deuxième section (1c).

13. Couvercle selon la revendication 1, 11 ou 12, **caractérisé en ce que** la section de transition (1g) s'étend le long d'un axe longitudinal incliné qui s'étend à partir dudit premier plan axial (I) jusqu'audit deuxième plan axial (II).

14. Couvercle selon la revendication 1, 11, 12 ou 13, **caractérisé en ce que**, dans ladite région adjacente (1f), l'élément élastique (9) présente une épaisseur qui augmente progressivement dans ladite section de transition (1g) et qui diminue en direction de l'extrémité libre (1d) de ladite deuxième section (1c).

15. Couvercle selon la revendication 1, **caractérisé en ce que** l'extrémité libre (1d) de la deuxième section (1c) présente, au moins partiellement, un bord saillant inférieur (1h) qui est adapté pour entrer en contact avec la surface extérieure (6a) de ladite partie mobile (6, 12) du véhicule (11).

16. Couvercle selon la revendication 15, **caractérisé en ce que** chaque bord saillant (1h) présente une section transversale incurvée de façon convexe.

17. Couvercle selon la revendication 3, **caractérisé en ce que** ladite deuxième région (1c) est trapézoïdale.

18. Couvercle selon la revendication 17, **caractérisé en ce que** ladite deuxième région trapézoïdale (1c) présente une base dont la section transversale est plus petite que la section transversale de la première région (1a).

19. Couvercle selon la revendication 18, **caractérisé en ce que** la première région (1a) comporte deux bords saillants (1h) qui s'étendent respectivement à partir des côtés en direction du centre de la première région (li), et qui sont adaptés pour se trouver en contact avec la surface extérieure (6a) de ladite partie mobile (6) du véhicule (11), lesdits bords saillants (1h) étant espacés l'un de l'autre d'une distance qui est sensiblement égale à l'étendue transversale de la base de ladite deuxième région (1c).

20. Couvercle selon la revendication 1, **caractérisé en ce que** la matière dont l'élément élastique (9) est constitué est le caoutchouc de silicone.

21. Couvercle selon la revendication 1, **caractérisé en ce que** la couche à frottement réduit (8) est constituée d'un tissu de polyester.

22. Couvercle selon la revendication 1, **caractérisé en ce que** ladite première section (1a) est configurée sous la forme d'une patte de fixation.

23. Couvercle renforcé selon la revendication 1, **caractérisé en ce qu'**au moins la surface extérieure (1i) de ladite deuxième section (1c) est recouverte de peinture.

24. Couvercle renforcé selon la revendication 1, **caractérisé en ce que** la surface extérieure du couvercle est recouverte de peinture.

25. Couvercle renforcé selon la revendication 1, **caractérisé en ce que** la première section de fixation (1a) comporte au moins un trou de passage (16) qui est destiné à recevoir les moyens de fixation (10).

26. Couvercle renforcé selon la revendication 25, **caractérisé en ce que** les moyens de fixation (10) sont sélectionnés parmi des rivets, des ensembles à boulons et écrous, et des ensembles à boulons et écrous à riveter.
